(19) Europäisches Patentamt
European Patent Office
Office européen des brevets

(11) Numéro de publication: **0 178 997**
**A1**

(12) # DEMANDE DE BREVET EUROPEEN

(21) Numéro de dépôt: 85402001.3

(22) Date de dépôt: 15.10.85

(51) Int. Cl.⁴: C 01 B 21/097

(30) Priorité: 17.10.84 FR 8415892

(43) Date de publication de la demande: 23.04.86 Bulletin 86/17

(84) Etats contractants désignés: CH DE GB LI NL SE

(71) Demandeur: SOCIETE NATIONALE ELF AQUITAINE
Société anonyme dite
Tour Elf 2, Place de la Coupole La Défense 6
F-92400 Courbevoie(FR)

(72) Inventeur: de Jaeger, Roger
8, rue des Buissons Gruson
F-59152 Chereng(FR)

(72) Inventeur: Pagniez, Guy
2 Bois de l'Eglise Cidex 58C Pouey de Lescar
F-64230 Lescar(FR)

(72) Inventeur: Potin, Philippe
9 Rue des Pâquerettes
F-64140 Billere(FR)

(74) Mandataire: Boillot, Marc
SOCIETE NATIONALE ELF AQUITAINE Division Propriété Industrielle Tour Elf
F-92078 Paris la Défense Cédex 45(FR)

(54) **Procédé de préparation de polychlorophosphazènes linéaires.**

(57) Procédé pour la préparation de polychlorophosphazènes linéaires possédant un groupement terminal $-PXCL_2$, X désignant O ou S, dans lequel on polycondense un monomère de formule $P_2NXCl_5$ par chauffage dans des conditions de pression et de température propres à libérer $PXCl_3$ avec poursuite dudit chauffage après cessation du dégagement de $PXCl_3$.

Au moins la phase de polycondensation par chauffage faisant suite au dégagement de $PXCl_3$ est réalisée en solution dans un mileu dissolvant à la fois le monomère et le polymère qui se forme et inerte vis à vis des constituants de la réaction de polycondensation.

Cette mise en oeuvre minimise les phénomènes de réticulation et permet d'obtenir des degrés de polycondensation élevés de manière parfaitement reproductible.

EP 0 178 997 A1

Croydon Printing Company Ltd.

0178997

TITRE MODIFIÉ
voir page de garde

SOCIETE NATIONALE ELF AQUITAINE - DPI 4913

PROCEDE DE PREPARATION DE POLYCHLOROPHOSPHAZENES LINEAIRES POSSEDANT UN GROUPEMENT TERMINAL $PXCl_2$, X DESIGNANT O OU S, PAR POLYCONDENSATION EN SOLUTION DES MONOMERES $P_2NXCL_5$

---

L'invention se rapporte à un procédé de préparation de polychlorophosphazènes linéaires possédant un groupement terminal $-PXCl_2$, X désignant un atome d'oxygène ou de soufre, par polycondensation des monomères $P_2NXCl_5$.

On sait qu'en chauffant les composés de formule $P_2NXCl_5$, X désignant un atome d'oxygène ou de soufre, dans des conditions de pression et de température propres à libérer $PXCl_3$, on forme des polychlorophosphazènes linéaires possédant un groupement terminal $-PXCl_2$. Ainsi dans le brevet français N° 79 24037 (publication N° 2466435) on décrit la préparation de polychlorophosphazènes linéaires présentant un groupement terminal dichlorophosphoryle de formule $-POCl_2$ en polycondensant le composé P - trichloro N-dichlorophosphoryle monophosphazène de formule brute $P_2NOCl_5$ par chauffage dans des conditions de pression et de température choisies pour libérer $POCl_3$, tandis que dans la demande de brevet français N° 83 11264 du 6 Juillet 1983 (publication N° 2548652) au nom de la demanderesse, on décrit la préparation de polychlorophosphazènes linéaires présentant un groupement terminal dichlorothiophosphoryle de formule $-PSCl_2$ en polycondensant le composé P-trichloro N-dichlorothiophosphoryl monophosphazène de formule brute $P_2NSCl_5$ par chauffage dans des conditions de pression et de

température appropriées pour libérer $PSCl_3$.

Ces polychlorophosphazènes linéaires à groupement terminal $-PXCl_2$ répondent à la formule brute suivante :

$$Cl_2\ (X)\ P-[-NPCl_2-]_n-Cl \quad (I)$$

dans laquelle n est un nombre égal ou supérieur à 4, la valeur de n pouvant être contrôlée à volonté pour l'obtention de chaînes de toute longueur moyenne désirée.

Ainsi n peut prendre des valeurs allant de 4 jusqu'à 1000 par exemple ou même jusqu'à des valeurs supérieures pouvant atteindre 5000 ou plus.

Sans être lié par cette hypothèse, on pense que la polycondensation de $P_2NXCl_5$, dont la formule développée peut s'écrire :

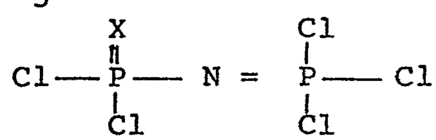

s'effectue conformément au schéma réactionnel ci-après :

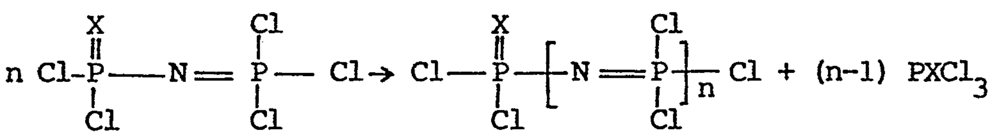

(II)

La formule (II) est supposée être la formule développée des polychlorophosphazènes linéaires ayant la formule brute (I).

Malgré des avantages indéniables, parmi lesquels on peut signaler tout particulièrement la simplicité de la mise en oeuvre, le taux élevé de conversion du monomère et le coût relativement faible dudit monomère, le procédé précité de préparation de polychlorophosphazènes linéaires à groupement terminal $-PXCl_2$ par polycondensation du monomère $P_2NXCl_5$ par chauffage n'est pas entièrement satisfaisant car il ne permet pas facilement d'obtenir des degrés de polycondensation élevés de manière reproductible.

En effet, lorsque le dégagement de $PXCl_3$ cesse, le degré de polycondensation moyen des polychlorophosphazènes linéaires formés est faible, à savoir de l'ordre de 20 à 30, ce qui signifie que lesdits polychlorophosphazènes sont des produits à chaînes courtes. Pour obtenir un

polycondensat ayant un degré de polycondensation plus élevé, ces produits à chaînes courtes doivent réagir entre eux par leurs extrémités pour former des produits à chaînes longues, ce qui nécessite une poursuite de la polycondensation après la fin du dégagement du composé $PXCl_3$. Le cours de cette deuxième phase de la polycondensation est très difficile à contrôler et l'obtention de polychlorophosphazènes non réticulés ayant des degrés de polycondensation supérieurs à environ 100 reste aléatoire. En effet le risque de réticulation augmente avec l'accroissement de la longueur des chaînes polymères et ce phénomène se développe d'une façon variable d'un essai à l'autre. Il en résulte donc une reproductibilité médiocre lorsque l'on cherche à atteindre des degrés de polycondensation élevés. Ceci constitue un handicap sérieux pour une mise en oeuvre industrielle du procédé car la plupart des applications des polychlorophosphazènes linéaires font appel à des produits de hautes masses moléculaires c'est-à-dire à des produits ayant des degrés de polycondensation élevés.

L'invention propose un perfectionnement au procédé précité de préparation de polychlorophosphazènes linéaires à groupement terminal $-PXCl_2$, qui permet de minimiser les phénomènes de réticulation au cours de la polycondensation et ainsi d'obtenir des degrés de polycondensation élevés de manière parfaitement reproductible.

Le procédé suivant l'invention pour la préparation de polychlorophosphazènes linéaires possédant un groupement terminal $-PXCl_2$, X désignant un atome d'oxygène ou de soufre, est du type dans lequel on polycondense un monomère de formule $P_2NXCl_5$ par chauffage dans des conditions de pression et de température propres à libérer $PXCl_3$ avec poursuite dudit chauffage après cessation du dégagement de $PXCl_3$, et il se caractérise en ce que l'on effectue au moins la phase de polycondensation qui fait suite au dégagement de $PXCl_3$, en opérant en solution dans un milieu dissolvant à la fois le monomère et le polychlorophosphazène qui se forme et inerte vis à vis des constituants de la réaction de polycondensation.

On peut donc mettre en oeuvre l'invention en réalisant tout d'abord une première phase de polycondensation du monomère en opérant en masse jusqu'à cessation du dégagement de $PXCl_3$, puis en ajoutant le solvant choisi au milieu réactionnel résultant de la polycondensation en masse et en maintenant la solution obtenue à une température appropriée pour réaliser une polycondensation finale en solution.

On peut également ajouter le solvant au milieu réactionnel durant la phase de polycondensation en masse avec dégagement de $PXCl_3$, cette addition pouvant être réalisée à n'importe quel moment au cours du déroulement de ladite phase de polycondensation.

De préférence le solvant est présent du début à la fin de la polycondensation du monomère.

Lorsqu'il est ajouté au milieu réactionnel de polycondensation durant la phase de polycondensation en masse avec dégagement de $PXCl_3$ ou lorsqu'il est présent dès le début de la polycondensation du monomère, le solvant ne doit pas former d'azéotrope avec le composé $PXCl_3$ et doit avoir une température d'ébullition supérieure, avantageusement d'au moins 20°C, à celle dudit composé $PXCl_3$.

Le solvant employé pour la mise en oeuvre de la polycondensation du monomère en solution peut consister en un solvant unique ou en un mélange de solvants. Ledit solvant peut en particulier consister en un ou plusieurs composés choisis parmi les hydrocarbures à caractère aromatique et leurs dérivés chlorés. Des exemples de tels solvants sont notamment le benzène, le naphtalène, le diphényle, le chlorobenzène, les dichlorobenzènes, les trichlorobenzènes, le tétrachlorobenzène, le pentachlorobenzène, l'hexachlorobenzène, les chloronaphtalènes et les chlorodiphényles.

La polycondensation unique en solution ou chacune des phases de la polycondensation, à savoir phase de polycondensation en masse et phase subséquente de polycondensation en solution, peuvent être effectuées à

des températures comprises entre 125°C et 380°C et plus particulièrement de 190°C à 350°C. Plus spécialement les températures de polycondensation sont choisies de 200°C à 320°C et de préférence de 210°C à 300°C.

Les pressions utilisées pour la polycondensation vont généralement de la pression atmosphérique à environ 60 bars. On peut cependant envisager, dans le cas d'utilisation d'un solvant à point d'ébullition très élevé, d'effectuer la polycondensation sous pression réduite, c'est-à-dire inférieure à la pression atmosphérique, pour abaisser quelque peu la température d'ébullition dudit solvant et ainsi éviter d'avoir à travailler à des températures trop élevées.

Lorsque la polycondensation est mise en oeuvre sous une pression égale à la pression atmosphérique ou voisine de cette dernière, la polycondensation en solution est effectuée dans un solvant suivant l'invention dont le point d'ébullition à pression atmosphérique est au moins égal à la température choisie pour ladite polycondensation en solution. De même lorsque l'on effectue la polycondensation sous pression, le solvant employé pour la polycondensation en solution a une température d'ébullition à la pression considérée qui est supérieure à la température choisie pour ladite polycondensation en solution.

La quantité de solvant à utiliser pour effectuer la polycondensation en solution peut varier assez largement. Il convient toutefois d'éviter l'emploi de quantités trop importantes de solvant, car ceci entraîne un ralentissement de la polycondensation, nécessite d'augmenter le volume du réacteur et oblige à recycler une grande quantité de solvant. Avantageusement la quantité pondérale de solvant à utiliser pour la polycondensation en solution représente de 0,1 à 5 fois et de préférence de 0,3 à 2 fois la quantité pondérale de monomère engagée dans la réaction de polycondensation.

Les réactions de substitution ultérieures des atomes de chlore du polychlorophosphazène résultant de la

polycondensation sont à prendre en compte pour le choix du solvant à utiliser pour la polycondensation en solution. Par exemple, si l'on veut substituer les chlores du polychlorophosphazène par des restes d'alcoolates, il faut prendre en compte le fait que les atomes de chlore éventuellement présents dans la molécule de solvant peuvent réagir avec les alcoolates et, pour éviter des pertes tant de solvant que d'alcoolates lors du traitement de substitution, choisir pour la polycondensation en solution soit un solvant chloré susceptible d'être éliminé aisément du polycondensat par distillation ou mieux un solvant non chloré.

Les polychlorophosphazènes linéaires obtenus par le procédé suivant l'invention sont utilisables dans les applications décrites à propos des polychlorophosphazènes linéaires objet du brevet français n° 79 24037. En particulier ils peuvent être soumis à diverses réactions de substitution des atomes de chlore qu'ils renferment par des restes organiques ou autres, notamment par des restes alcoxy ou aryloxy, pour la production de polyorganophosphazènes.

Un avantage important du procédé suivant l'invention réside dans le fait qu'en fin de polycondensation le milieu réactionnel renfermant le polycondensat se présente, après refroidissement vers 60-70°C, sous la forme d'une masse plus ou moins visqueuse que l'on peut diluer facilement à l'aide de solvants tels que le benzène pour former très rapidement une solution appropriée pour être envoyée dans la zone où s'effectue la réaction de substitution. Dans le procédé antérieur de polycondensation entièrement en masse, le polycondensat obtenu nécessite plusieurs heures pour être mis sous la forme d'une solution utilisable pour effectuer la réaction de substitution. Le procédé suivant l'invention permet donc de réaliser un gain de temps appréciable pour la réalisation de cette mise en solution, ce qui réduit de façon importante la durée du cycle des opération conduisant aux polyorganophosphazènes.

L'invention est illustrée par les exemples suivants donnés à titre non limitatif.

EXEMPLE 1

On opérait dans un réacteur de polycondensation consistant en un ballon de 500 ml à trois tubulures, équipé d'une prise de température interne, d'une entrée pour les réactifs et d'un condenseur à reflux surmonté successivement d'une tête de distillation, d'un condenseur horizontal et d'une recette graduée, l'ensemble étant maintenu sous atmosphère inerte. Le ballon était immergé dans un bain d'huile silicone chauffé par un agitateur magnétique chauffant, qui sert également pour l'agitation du contenu du réacteur.

Le réacteur était chargé avec 372,34 g de $P_2NOCl_5$, préparé comme décrit dans l'exemple I du brevet français N° 79 24037, et 184,5 g de trichloro - 1,2,4 benzène de point d'ébullition égal à 210°C à la pression atmosphérique, ce dernier produit jouant le rôle de solvant.

Le contenu du réacteur était alors agité et porté à la température de reflux du solvant, puis maintenu, sous agitation à cette température, c'est-à-dire 210°C, pendant 86 heures. Au bout de cette durée le dégagement de $POCl_3$ cessait, la quantité de $POCl_3$ récupérée représentant alors 98 % de la quantité théorique. On poursuivait ensuite le chauffage du milieu réactionnel à la température précitée pendant 118 heures supplémentaires. Au bout de ce temps, la quasi-totalité du trichloro - 1,2,4 benzène était éliminée par distillation sous vide et le polycondensat obtenu était mis en solution dans le benzène.

Un essai de contrôle de la présence éventuelle de gels de réticulation, réalisé par filtration sur filtre MILLIPORE® 0,4 µm, d'une fraction de ladite solution dans le benzène, s'avérait négatif.

La solution benzénique de polycondensat, c'est-à-dire du polychlorophosphazène formé par polycondensation de $P_2NOCl_5$, était traitée par $CF_3CH_2ONa$ pour remplacer les atomes de chlore du polycondensat par des groupements $CF_3CH_2O$- moins réactifs, ce qui permet d'obtenir un polymère plus facile à manipuler et sur lequel on peut effectuer des déterminations de masses moléculaires. Le traitement par $CF_3CH_2ONa$ était réalisé dans des conditions similaires à celles décrites par H.R. ALLCOCK et al (Inorg. Chem. 1966, 5, p. 1714) pour le traitement correspondant des polydichlorophosphazènes.

Le polymère trifluoroéthoxylé obtenu avait une masse moléculaire moyenne en poids ($\overline{M}w$), déterminée par diffusion de la lumière, égale à 371000, une viscosité intrinsèque ($\eta$), déterminée à 30°C dans le tétrahydrofuranne (en abrégé THF), de 45 ml/g et un degré moyen de polycondensation en poids $\overline{DP}$ de 1530.

$\overline{DP}$ représente le quotient de $\overline{M}w$ par la masse moléculaire d'un motif unitaire, c'est-à-dire du motif $-NP(CF_3CH_2O)_2-$, du polymère trifluoroéthoxylé.

EXEMPLE 2

Le mode opératoire était similaire à celui de l'exemple 1. Le dégagement de $POCl_3$ durait 83 heures et la phase de chauffage du milieu réactionnel après cessation du dégagement de $POCl_3$ était poursuivie pendant 115 heures supplémentaires.

La solution benzénique du polychlorophosphazène obtenu était exempte de gels.

Le polytrifluoroéthoxyphosphazène obtenu par substitution des chlores du polychlorophosphazène, comme indiqué dans l'exemple 1, possédait les caractéristiques suivantes :

$$\overline{Mw} = 318\,000$$

$$[\eta]^{30°C}_{THF} = 40 \text{ ml/g}$$

$$\overline{DP} = 1310$$

EXEMPLE 3

Le mode opératoire était similaire à celui de l'exemple 1 en remplaçant le trichloro - 1,2,4 benzène par la même quantité pondérale de naphtalène et en travaillant à la température de reflux du naphtalène, c'est-à-dire à 218°C, à la pression atmosphérique. Le dégagement de $POCl_3$ durait 101 heures et la phase de chauffage du milieu réactionnel après cessation du dégagement de $POCl_3$ était poursuivie pendant 240 heures supplémentaires au reflux du naphtalène.

Au bout de ce temps le milieu réactionnel était refroidi vers 70°C et dilué par du benzène.

La solution benzénique du polychlorophosphazène obtenu était exempte de gels.

Le polytrifluoroéthoxyphosphazène obtenu par substitution des chlores du polychlorophosphazène, comme indiqué dans l'exemple 1, possédait les caractéristiques suivantes :

$$\overline{Mw} = 328\,000$$

$$[\eta]^{30°C}_{THF} = 41 \text{ ml/g}$$

$$\overline{DP} = 1350$$

EXEMPLE 4

On opérait en suivant un mode opératoire similaire à celui décrit dans l'exemple 1, avec toutefois remplacement du trichloro - 1,2,4 benzène par 190 g de

tétrachlorodiphényle et mise en oeuvre de la polycondensation à 280°C.

Le dégagement de $POCl_3$ cessait au bout de 1,5 heure et la phase de chauffage du milieu réactionnel après cessation du dégagement de $POCl_3$ était poursuivie encore pendant 2 heures.

Au bout de ce temps le milieu réactionnel était refroidi vers 70°C puis dilué par du benzène.

La solution benzénique du polychlorophosphazène obtenu était exempte de gels.

Le polychlorophosphazène était transformé en polytrifluoroéthoxyphosphazène en opérant comme indiqué dans l'exemple 1 mais avec un excès de $CF_3CH_2ONa$ qui tenait compte des chlores du tétrachlorodiphényle laissé dans le milieu.

Le polytrifluoroéthoxyphosphazène résultant possédait les caractéristiques suivantes :

$$\overline{Mw} = 404\ 000$$

$$[\eta]^{30°C}_{THF} = 48\ ml/g$$

$$\overline{DP} = 1660$$

EXEMPLE 5

On opérait dans un réacteur à double enveloppe d'une contenance de 2 litres réalisé en acier émaillé et équipé d'une prise de température interne, d'une entrée pour les réactifs et d'un condenseur à reflux surmonté successivement d'une tête de distillation, d'un condenseur horizontal et d'une recette consistant en un tube de verre conçu pour résister à la pression, l'ensemble étant maintenu sous atmosphère inerte. Le réacteur était chauffé par circulation d'huile dans la double enveloppe et comportait un système d'agitation à ancre.

Le réacteur était chargé avec 992 g de $P_2NOCl_5$ et 1000 g de dichloro - 1,4 benzène. L'ensemble était maintenu sous une pression d'azote égale à 9 bars, ce qui permettait d'opérer au reflux du dichloro - 1,4 benzène à 280°C.

Au bout d'une heure de maintien du milieu réactionnel à ladite température le dégagement de $POCl_3$ cessait et après cessation dudit dégagement on poursuivait encore le chauffage du milieu réactionnel à cette température pendant 2,5 heures supplémentaires.

On distillait ensuite le dichloro - 1,4 benzène sous vide à 130°C et diluait le produit restant par du benzène.

La solution benzénique ainsi formée, qui renfermait le polychlorophosphazène résultant de la polycondensation du $P_2NOCl_5$, était exempte de gels.

Le polytrifluoroéthoxyphosphazène obtenu par substitution des atomes de chlore du polychlorophosphazène, comme indiqué dans l'exemple 1, possédait les caractéristiques suivantes :

$$\overline{Mw} = 460\ 000$$

$$[\eta]^{30°C}_{THF} = 53\ ml/g$$

$$\overline{DP} = 1900$$

EXEMPLE 6

On opérait en suivant un mode opératoire similaire à celui utilisé dans l'exemple 1 avec toutefois remplacement du trichloro - 1,2,4 benzène par 740 g de trichlorodiphényle et mise en oeuvre de la totalité de la polycondensation à une température de 240°C sous pression atmosphérique.

Au bout de 19 heures de maintien du milieu réactionnel à 240°C le dégagement de $POCl_3$ cessait et après cessation dudit dégagement on poursuivait encore le chauffage du milieu réactionnel à ladite température pendant 36 heures.

Au bout de ce temps le milieu réactionnel était refroidi vers 70°C puis dilué par du benzène.

La solution benzénique renfermant le polychlorophosphazène était exempte de gels.

Le polychlorophosphazène était transformé en polytrifluoroéthoxyphosphazène en opérant comme indiqué dans l'exemple 1 mais avec un excès de $CF_3CH_2ONa$ qui tient compte des chlores du trichlorodiphényle laissé dans le milieu.

Le polytrifluoroéthoxyphosphazène obtenu par substitution des atomes de chlore du polychlorophosphazène par $CF_3CH_2ONa$, comme indiqué dans l'exemple 1, présentait les caractéristiques suivantes :

$$\overline{Mw} = 339\ 000$$

$$[\eta]^{30°C}_{THF} = 42\ ml/g$$

$$\overline{DP} = 1395$$

EXEMPLE 7

On réalisait la polycondensation du monomère $P_2NSCl_5$. Ce monomère était synthétisé en préparant tout d'abord $P_3NCl_{12}$ par réaction de $PCl_5$ sur $NH_4Cl$ dans $POCl_3$ comme indiqué par SEGLIN et al (brevet américain n° 3 231 327), puis en faisant réagir le composé $P_3NCl_{12}$ obtenu avec $P_2S_5$ dans les conditions opératoires décrites par KHODAK et GILYAROV (Izv. Akad. Nauk SSSR, Ser. Khim., 1979 (4), p. 924).

La polycondensation était effectuée en suivant un mode opératoire analogue à celui de l'exemple 1 avec toutefois utilisation de 350 g de $P_2NSCl_5$ et de 116 g de trichloro - 1,2,4 benzène.

Le milieu réactionnel était chauffé à sa température de reflux et la totalité du $PSCl_3$ était recueillie après 65 heures. Après cessation du dégagement du composé $PSCl_3$ le chauffage du milieu réactionnel était encore poursuivi pendant 89 heures.

Au bout de ce temps la quasi-totalité du trichloro - 1,2,4 benzène était éliminée par distillation sous vide et le polycondensat obtenu était mis en solution dans le benzène.

La solution benzénique obtenue ne renfermait pas de gels.

Le polychlorophosphazène résultant de la polycondensation du $P_2NSCl_5$ était transformé en polytrifluoroéthoxyphosphazène en opérant comme indiqué dans l'exemple 1.

Le polytrifluoroéthoxyphosphazène obtenu présentait les caractéristiques suivantes :

$\overline{Mw}$ = 156 500

$[\eta]^{30°C}_{THF}$ = 24 ml/g

$\overline{DP}$ = 640

## REVENDICATIONS

1 - Procédé pour la préparation de polychlorophosphazènes linéaires possédant un groupement terminal - $PXCl_2$, X désignant un atome d'oxygène ou de soufre, dans lequel on polycondense un monomère de formule $P_2NXCl_5$ par chauffage dans des conditions de pression et de température propres à libérer $PXCl_3$ avec poursuite dudit chauffage après cessation du dégagement de $PXCl_3$, caractérisé en ce que l'on effectue au moins la phase de polycondensation par chauffage qui fait suite au dégagement de $PXCl_3$ en opérant en solution dans un milieu solvant à la fois du monomère et du polychlorophosphazène qui se forme et inerte vis à vis des constituants de la réaction de polycondensation.

2 - Procédé suivant la revendication 1, caractérisé en ce que le milieu solvant consiste en un ou plusieurs composés choisis parmi les hydrocarbures à caractère aromatique et leurs dérivés chlorés.

3 - Procédé suivant la revendication 2, caractérisé en ce que le solvant consiste en un ou plusieurs composés choisis parmi le benzène, le naphtalène, le diphényle, le chlorobenzène, les trichlorobenzènes, les dichlorobenzènes, le tétrachlorobenzène, le pentachlorobenzène, l'hexachlorobenzène, les chloronaphtalènes et les chlorodiphényles.

4 - Procédé suivant l'une des revendications 1 à 3, caractérisé en ce que la polycondensation est effectuée à des températures comprises entre 125°C et 380°C et plus particulièrement allant de 190°C à 350°C.

5 - Procédé suivant la revendication 4, caractérisé en ce que les températures de polycondensation sont choisies de 200°C à 320°C et de préférence de 210°C à 300°C.

6 - Procédé suivant l'une des revendications 1 à 5, caractérisé en ce que la polycondensation est effectuée sous des pressions allant de la pression atmosphérique à 60 bars environ.

7 - Procédé suivant l'une des revendications 1 à 6, caractérisé en ce que la quantité pondérale de solvant à utiliser pour la polycondensation en solution représente de 0,1 à 5 fois et de préférence de 0,3 à 2 fois la quantité pondérale de monomère soumise à la polycondensation.

8 - Procédé suivant l'une des revendications 1 à 7, caractérisé en ce que le solvant est ajouté au milieu réactionnel durant la phase de polycondensation en masse avec dégagement de $PXCl_3$ à n'importe quel moment au cours du déroulement de ladite phase.

9 - Procédé suivant l'une des revendications 1 à 7, caractérisé en ce que le solvant est présent du début à la fin de la polycondensation du monomère.

10 - Procécé suivant la revendication 8 ou 9, caractérisé en ce que le solvant ne forme pas d'azéotrope avec le composé $PXCl_3$ et possède une température d'ébullition supérieure, avantageusement d'au moins 20°C, à celle dudit composé.

11 - Procédé suivant l'une des revendications 1 à 10, caractérisé en ce que la polycondensation est effectuée à la pression atmosphérique et que la température d'ébullition du solvant à pression atmosphérique est au moins égale à la température de polycondensation en solution.

12 - Procédé suivant l'une des revendications 1 à 10, caractérisé en ce que la polycondensation est effectuée sous pression et que la température d'ébullition du solvant à la pression considérée est au moins égale à la température choisie pour la polycondensation en solution.

Office européen des brevets

**0178997**

# RAPPORT DE RECHERCHE EUROPEENNE

EP 85 40 2001

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | EP-A-0 026 685 (INSTITUT MONDIAL)<br>* Revendications 1,2 * & FR - A - 2 466 435 (Cat. D)<br>--- | 1 | C 01 B 21/097 |
| P,A | EP-A-0 132 188 (ELF)<br>* Revendications 1,2 * & FR - A - 2 548 652 (Cat. D,A)<br>--- | 1 | |
| A | FR-A-2 424 876 (FIRESTONE RUBBER)<br>* Revendications 1,3,4,8,11 *<br>--- | 1,3,4-6 | |
| A | FR-A-2 272 952 (HORIZONS RESEARCH)<br>* Revendications 1-3 *<br>----- | 1,3 | DOMAINES TECHNIQUES RECHERCHES (Int. Cl.4)<br>C 01 B 21/097<br>C 01 B 21/098 |

Le présent rapport de recherche a été établi pour toutes les revendications

| Lieu de la recherche | Date d'achèvement de la recherche | Examinateur |
|---|---|---|
| LA HAYE | 13-12-1985 | KESTEN W.G. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82